# EUROPÄISCHE PATENTANMELDUNG

(11) **EP 2 301 896 A1**
(43) Veröffentlichungstag der Anmeldung: **30.03.2011**
(21) Anmeldenummer: 09011522.1
(22) Anmeldetag: 09.09.2009
(51) Int. Cl.: C02F 11/16, F26B 17/02, F26B 11/22, F26B 3/04, F26B 9/08

(54) **Trockenvorrichtung für Klärschlamm**

(71) Anmelder: Dormeyer, Roland, 72401 Haigerloch-Gruol (DE)
(72) Erfinder:
(74) Vertreter: Späth, Dieter

(57) **Zusammenfassung**

Die Erfindung betrifft eine Vorrichtung (6) zum Trocknen von Klärschlamm, mit einer Trockenfläche (8), auf die Klärschlamm ausbringbar ist, und mit einem Stetigförderer (10), der ein oder mehrere endlos umlaufende Zugmittel (11) und mindestens einen an dem Zugmittel (11) befestigten Mitnehmer (12) zum Fördern und zum Wenden des Klärschlamms aufweist, der in einer Förderrichtung bewegbar ist. Die Erfindung schlägt vor, die Vorrichtung (6) mit mindestens zwei übereinander angeordneten Trockenflächen (8, 9) auszubilden und das mindestens eine Zugmittel (11) derart endlos entlang der Trockenflächen (8, 9) zu führen, dass der Mitnehmer (12) über die verschiedenen Trockenflächen (8, 9) geführt wird.

## Beschreibung

Die Erfindung betrifft eine Vorrichtung zum Trocknen von Klärschlamm oder dergleichen Biomasse, mit einer Trockenfläche auf die Klärschlamm ausbringbar ist, und mit einem Stetigförderer, der ein oder mehrere endlos umlaufende Zugmittel und mindestens einen an dem Zugmittel befestigten Mitnehmer zum Fördern und Wenden des Klärschlamms aufweist, der in einer Förderrichtung bewegbar ist.

Derartige Trockenvorrichtungen zum Trocknen von Klärschlamm oder dergleichen sind an sich aus dem Stand der Technik bekannt. Beispielhaft wird auf das Gebrauchsmuster DE 20 2008 005 798 U1 verwiesen. Diese Druckschrift offenbart eine Vorrichtung zum Trocknen von Schlamm, insbesondere von Klärschlamm oder ähnlicher Biomasse, mit einer Trockenfläche, auf die der Klärschlamm oder dergleichen zum Trocknen ausbringbar ist, und mit einem Stetigförderer zum Fördern, Zerkleinern und/oder Wenden des Schlamms auf der Trockenfläche. Ein Untertrum des Stetigförderers verläuft über der Trockenfläche, ein Obertrum ist oberhalb zurückgeführt. Der Stetigförderer ist als Kratzförderer ausgeführt und weist mehrere an einem Räumbalken befestigte Mitnehmerbolzen auf, die sich mit Abstand über der Trockenfläche befinden und die während einer Förderbewegung den Klärschlamm durchkämmen. Der Räumbalken ist beispielsweise an einer umlaufenden Förderkette oder einem umlaufenden Förderseil befestigt, wobei sich die Mitnehmerbolzen senkrecht zu der Förderrichtung und vom Untertrum nach unten zu der Trockenfläche hin erstrecken.

Weiterhin ist es bekannt, den Wirkungsgrad einer gattungsgemäßen Trockenvorrichtung durch eine über den Schlamm streichende Luftströmung zu verbessern. Bei einer aus der DE 43 15 321 C2 bekannten Vorrichtung dieser Art wird Schlamm mittels einer Wende- und Transportvorrichtung in einem Gebäude gefördert und ein Luftstrom entgegen der Förderrichtung über den Schlamm geleitet, der Feuchtigkeit aus dem Schlamm aufnimmt und zur Umgebung abführt.

Ein Nachteil bekannter Vorrichtungen zum Trocknen von Klärschlamm ist ihr großer Flächenbedarf.

Der Erfindung liegt die Aufgabe zugrunde, eine Vorrichtung zum Trocknen von Klärschlamm oder dergleichen Biomasse vorzuschlagen, die bei gegebener Trockenfläche eine kleinere Grundfläche benötigt.

Diese Aufgabe wird erfindungsgemäß durch eine Vorrichtung zum Trocknen von Klärschlamm oder dergleichen Biomasse mit den Merkmalen des Anspruchs 1 gelöst. Weitere vorteilhafte Ausgestaltungen sind den rückbezogenen Ansprüchen zu entnehmen.

Die vorliegende Erfindung ist dabei nicht nur auf die Trocknung von Klärschlamm beschränkt, sondern umfasst die Trocknung von anderer Biomasse, Schlämmen allgemein und/oder schüttfähigen Feststoffen.

Die erfindungsgemäße Vorrichtung zum Trocknen von Klärschlamm weist mindestens zwei übereinander angeordnete Trockenflächen auf. Das verkleinert die Grundfläche der Vorrichtung auf etwa die Hälfte bei zwei Trockenflächen bzw. auf etwa den Bruchteil der Anzahl der übereinander angeordneten Trockenflächen. Das mindestens eine Zugmittel des Stetigförderers ist derart endlos an den Trockenflächen entlanggeführt, dass der Mitnehmer über die verschiedenen Trockenflächen bewegt wird und den Klärschlamm wendet, zerkleinert und fördert. Es fördert, wendet und zerkleinert als ein Stetigförderer den Klärschlamm auf zwei oder mehr Trockenflächen, es werden ein Obertrum und ein Untertrum des Stetigförderers zum Fördern, Wenden und Zerkleinern des Klärschlamms genutzt.

Da der Klärschlamm überwiegend an der Oberfläche getrocknet wird, indem die darin enthaltene Feuchtigkeit an die Umgebungsluft abgegeben und mittels einer Luftströmung abtransportiert wird, wird der Trocknungsprozess durch gelegentliches, sich wiederholendes Wenden des Klärschlamms beschleunigt. Dies geschieht mit Hilfe des mindestens einen an dem Zugmittel befestigten Mitnehmers für den Klärschlamm, der den Klärschlamm außerdem bei Betrieb des Zugmittels in einer Förderrichtung verschiebt. Der Stetigförderer wird vorzugsweise nicht kontinuierlich, sondern in gleichen oder ungleichen Zeitabständen angetrieben. Der Stetigförderer weist vorzugsweise mehrere Mitnehmer auf, die über eine Breite der Trockenflächen und/oder eine Länge der Zugmittel des Stetigförderers gleich- oder ungleichmäßig verteilt angeordnet sind. Die Mitnehmer können auf den Trockenflächen schleifen oder mit Abstand von den Trockenflächen enden. Die Mitnehmer können längs und quer so verteilt sein, dass sie die gesamte Breite der Trockenfläche überstreichen und den Klärschlamm bei einem Arbeitstakt des Stetigförderers auf der gesamten Breite der Trockenfläche auf einmal wenden. Die Mitnehmer können starr, beweglich, federnd, beispielsweise als Federzinken ausgebildet sein. Bei jedem Wendevorgang bewegen die Mitnehmer den Klärschlamm ein Stück weiter auf den Trockenflächen vorwärts. Zum Durchmischen des Klärschlamms beim Wenden können die Mitnehmer beispielsweise stift-, paddel- oder pflugscharförmig ausgebildet sein, wobei deren Abstand zu der Trockenfläche fest vorgegeben oder variabel einstellbar ist.

Zum Betrieb des Stetigförderers ist ein Antrieb vorgesehen, der ein endlos umlaufendes Zugmittel in Förderrichtung der Trockenvorrichtung antreibt. Bei mehreren vorgesehenen Zugmitteln sind diese parallel zueinander angeordnet und weisen einen gemeinsamen Antrieb auf. Die Trockenflächen können gruppenweise zusammengefasst jeweils einen zugeordneten Stetigförderer aufweisen. Abhängig von der Anzahl der Trockenflächen können die Stetigförderer eine Trockenfläche umschließen oder mäanderförmig an mehreren Trockenflächen entlanggeführt sein. Üblicherweise weisen gattungsgemäße Trockenvorrichtungen für Klärschlamm eine Länge von 50 bis 100 m und mehr auf. Durch die Aufteilung in mehrere übereinander angeordnete Trockenflächen kann die Länge der Trockenvorrichtung im wesentlichen entsprechend der Anzahl der Trockenflächen reduziert werden.

Vorzugsweise weist der Stetigförderer mindestens zwei Mitnehmer auf, die entgegengesetzt vom Stetigförderer nach außen und nach innen abstehen. Damit kann zum einen die Anzahl der Stetigförderer für die Trockenvorrichtung mit mehreren Trockenflächen reduziert und zum anderen der konstruktive Aufbau einer solchen Trockenvorrichtung vereinfacht werden. Der Klärschlamm wird auf den verschiedenen Trockenflächen von den nach innen abstehenden Mitnehmern des Obertrums oder den nach außen abstehenden Mitnehmern des Untertrums des Stetigförderers gewendet und gefördert.

Bei einer bevorzugten Ausführungsform der Erfindung ist ein Eintrag für den Klärschlamm oben, d.h. oberhalb einer obersten Trockenfläche, und ein Austrag für den Klärschlamm unten, d.h. unterhalb der untersten Trockenfläche angeordnet. Der Klärschlamm wird auf die oberste Trockenfläche der Trockenvorrichtung an einem unterhalb des Eintrags angeordneten Aufnahmeende ausgebreitet aufgebracht und mittels der Mitnehmer gewendet und in Förderrichtung bewegt. Am Ende einer Trockenfläche fällt der Klärschlamm auf die darunter liegende Trockenfläche und vom Ende der untersten Trockenfläche in den Austrag der Trockenvorrichtung.

Für die Übergabe des Klärschlamms von einer Trockenfläche der Trockenvorrichtung auf die darunter befindliche Trockenfläche ist keine Vorrichtung erforderlich. Der Klärschlamm fällt vom Ende der jeweiligen Trockenfläche von selbst auf die darunter angeordnete nachfolgende Trockenfläche. Dazu sind die Trockenflächen günstigerweise in bzw. entgegen der Förderrichtung zueinander versetzt angeordnet.

Die mindestens zwei Trockenflächen ermöglichen Eintrag und den Austrag des Klärschlamms am gleichen Ende der Vorrichtung. Das hat den Vorteil, dass nur ein Ende der Vorrichtung für Fahrzeuge zugänglich sein muss. Allerdings können der Eintrag und der Austrag auch an verschiedenen Enden oder allgemein an verschiedenen Stellen der Vorrichtung vorgesehen sein. Vorzugsweise, jedoch nicht zwingend, befinden sich der Eintrag und der Austrag bei einer geraden Anzahl Trockenflächen am gleichen und bei einer ungeraden Anzahl Trockenflächen an verschiedenen Enden der Vorrichtung.

Bei einer bevorzugten Variante der Erfindung weist die Trockenvorrichtung zwei Trockenflächen übereinander auf. Die obere Trockenfläche ist unter einem Obertrum bzw. zwischen dem Obertrum und einem Untertrum und die untere Trockenfläche unter dem Untertrum des Stetigförderers angeordnet. Die Zugmittel des Stetigförderers umschließen die obere Trockenfläche. Auf der oberen Trockenfläche wird der Klärschlamm durch Mitnehmer, die vom Stetigförderer nach innen abstehen, und auf der unteren Trockenfläche von Mitnehmern, die vom Stetigförderer abstehen, bewegt. Dabei werden für den Klärschlamm auf der oberen und unteren Trockenfläche Mitnehmer auf unterschiedlichen Seiten des Stetigförderers verwendet.

Bei mehr als zwei Trockenflächen können jeweils zwei Trockenflächen einen Stetigförderer wie vorstehend beschrieben aufweisen. Oder es wird ein Stetigförderer mäanderförmig über bzw. entlang von mehr als zwei Trockenflächen geführt.

Die Trockenfläche, die in üblicher Weise mit Luft in Kontakt kommt, ist vorzugsweise beheizbar und/oder der Klärschlamm ist mit Luft, vorzugsweise mit Warmluft beaufschlagbar. Dies verkürzt die Trockenzeit des Klärschlamms in der Trockenvorrichtung und ermöglicht somit einen höheren Durchsatz von Klärschlamm. Die Warmluft kann der Trockenvorrichtung von extern zugeführt oder in der Trockenvorrichtung erzeugt werden.

Bei einer Ausführungsform der Erfindung ist die Vorrichtung zum Trocknen von Klärschlamm in einer Kammer untergebracht, die unten einen Lufteintritt für Zuluft und oben einen Luftaustritt für Abluft aufweist. Die Kammer ist vorzugsweise in einem Untergeschoss eines Gebäudes angeordnet. Die Kammer kann somit von einem Luftstrom durchströmt werden, der feuchte Luft aus der Kammer abtransportiert und durch trockene Luft ersetzt. Dies ist notwendig, da mit Feuchtigkeit gesättigte Luft kaum mehr von dem Klärschlamm ausgeschiedenes Wasser aufnehmen kann, und sich der Trocknungsprozess ohne Luftaustausch deutlich verlängern würde. Der Luftstrom kann ein Kaltluft- oder ein Warmluftstrom sein. Der Luftstrom wird so geführt, dass er über die Trockenfläche streicht.

Der Luftstrom kann auf natürlicher Thermik beruhen, d.h. durch Konvektion in der Vorrichtung bewirkt werden, bei der erwärmte Luft selbstständig nach oben steigt, oder durch einen künstlich erzeugten Luftstrom, der in die Kammer eingeleitet wird. Ein solcher beispielsweise mit einem Gebläse erzeugter Luftstrom kann einen natürlichen thermischen Luftstrom durch die Kammer verstärken. Vorzugsweise wird der künstliche Luftstrom durch eine Absaugeinrichtung für die Abluft bewirkt, die nach dem Luftaustritt für die Abluft angeordnet ist. Es ist auch möglich, alternativ oder zusätzlich eine Einblaseinrichtung für die Zuluft vor dem Lufteintritt in die Kammer vorzusehen. Die Abluft kein unbehandelt oder behandelt, beispielsweise gefiltert, abgeblasen werden.

Bei einer begünstigten Ausführungsform der Erfindung sind der Lufteintritt und der Luftaustritt aus der Kammer abhängig von der Anzahl der Trockenflächen auf derselben oder auf unterschiedlichen Stirnseiten der Kammer angeordnet. Bei einer geraden Anzahl von Trockenflächen sind der Lufteintritt und der Luftaustritt auf der gleichen Stirnseite der Kammer angeordnet und bei einer ungeraden Anzahl von Trockenebenen auf unterschiedlichen Stirnseiten der Kammer. Der Lufteintritt kann beispielsweise im Bereich des Austrages und der Luftaustritt im Bereich des Eintrages des Klärschlamms angeordnet sein. Durch diese Anordnung wird verhindert, dass mit Feuchtigkeit gesättigte Luft an dem getrockneten Klärschlamm, insbesondere auf der untersten Trockenfläche, vorbeistreicht und diesen wieder befeuchtet und dass die Trocknung des Klärschlamms wegen Sättigung der Luft mit Feuchtigkeit schon vor dem Austrag des Klärschlamms endet. Die Luftströmung beaufschlagt im Gegenstrom zu der Förderrichtung der Trockenvorrichtung den Klärschlamm.

Der Trocknungsprozess des Klärschlamms kann dadurch beschleunigt werden, dass man die Kammer der Trockenvorrichtung beheizt. Bei einer solchen beheizbaren Kammer kann ein Kammerboden und/oder eine Kammerdecke und/oder mindestens eine Kammerwand eine Heizeinrichtung aufweisen. Die Heizeinrichtung kann in Boden, Decke oder Wand integriert oder diesen vorgehängt sein. Zur Nutzung von Solarenergie können Solarkollektoren zur Wassererwärmung und/oder Solarzellen zur Stromerzeugung vorgesehen sein. Des weiteren kann die aus der Kammer austretende aufgeheizte Luft einem Wärmetauscher zugeführt und/oder für eine Warmluftheizung verwendet werden.

Prinzipiell können bei größeren Trocknungsanlagen mehrere der erfindungsgemäßen Trocknungsvorrichtungen in einem Gebäude nebeneinander, hintereinander bzw. übereinander in einer oder jeweils einer Kammer angeordnet sein. Insbesondere können in einer solchen Kammer mehrere Trockenflächen neben-, hinter- und/oder übereinander gruppiert sein.

Nachfolgend wird die Erfindung anhand eines in der Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Die einzelnen Merkmale der Erfindung können für sich allein oder zu mehreren bei unterschiedlichen Ausführungsformen der Erfindung verwirklicht sein. Es zeigen:
- Figur 1: ein Parkhaus mit zwei erfindungsgemäßen Trockenvorrichtungen für Klärschlamm, die in zwei nebeneinander liegenden Kammern in ei- nem Untergeschoss angeordnet sind;
- Figur 2: einen Längsschnitt durch das Untergeschoss aus Figur 1, mit einer entsprechenden Schnittdarstellung der Trockenvorrichtung mit Tro- ckenfläche und Stetigförderer; und
- Figur 3: eine Ausschnittsvergrößerung der Trockenvorrichtung gemäß Figur 2 im Bereich von Umlenkungen des Stetigförderers.

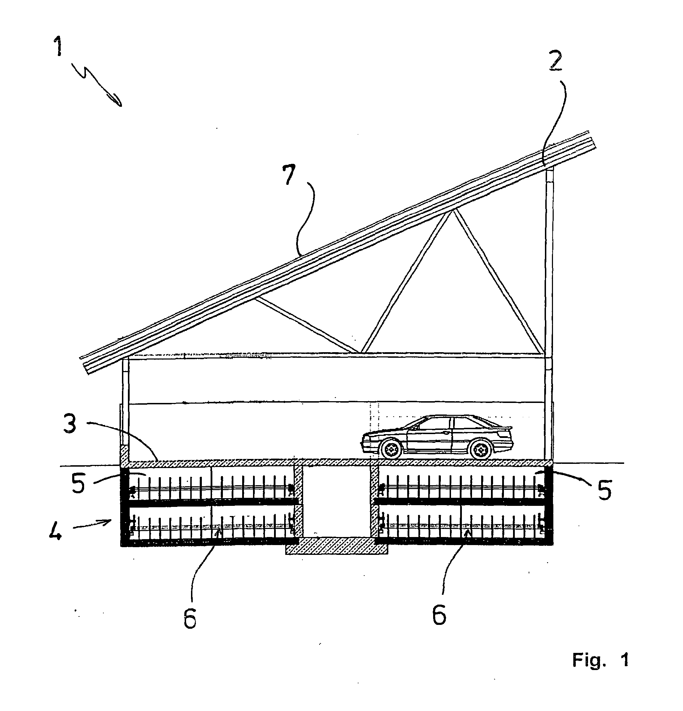

Figur 1 zeigt ein Parkhaus 1 mit einem Dach 2, einer Parkfläche 3 und einem Untergeschoss 4 im Querschnitt. Das Untergeschoss 4 weist zwei parallel zueinander mit Abstand in Längsrichtung des Parkhauses 1 verlaufende Kammern 5 auf, in denen jeweils eine erfindungsgemäße Trockenvorrichtung 6 für Klärschlamm angeordnet ist. Die Kammern 5 mit der Trockeneinrichtung 6 sind jeweils identisch ausgebildet. Das Dach 2 trägt eine Solareinrichtung 7 zur Gewinnung von Sonnenenergie für die Energieversorgung der Trockenvorrichtung 6. Die Solareinrichtung 7 kann zur Nutzung von Solarenergie Solarkollektoren zur Wassererwärmung und/oder Solarzellen zur Stromerzeugung aufweisen.

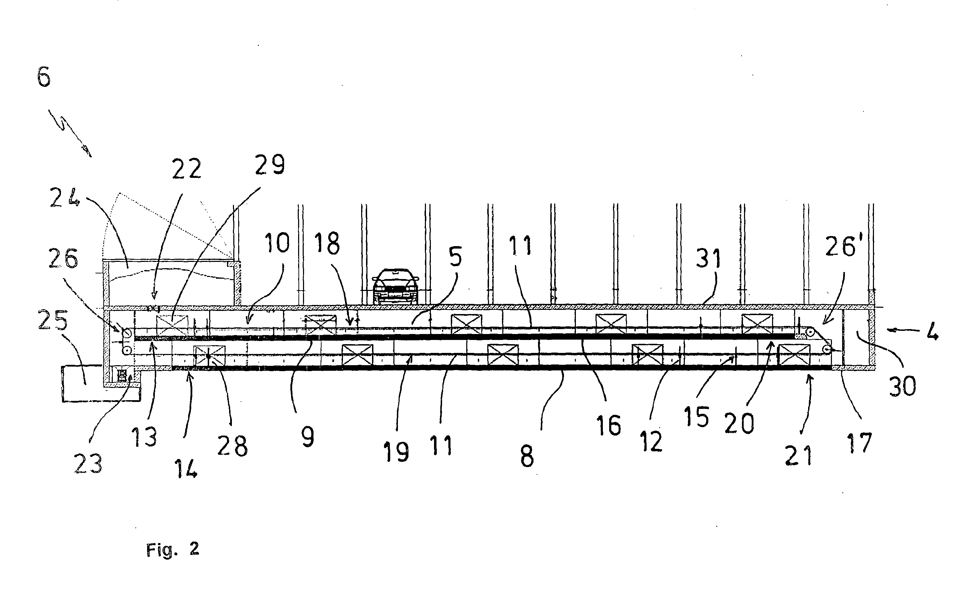

Die Figur 2 zeigt einen Längsschnitt durch das Untergeschoss 4 aus Figur 1 mit einer entsprechenden Schnittdarstellung einer der Kammern 5 und der darin angeordneten Trockenvorrichtung 6. Die Trockenvorrichtung 6 weist zwei übereinander angeordnete Trockenflächen 8, 9 auf. Zum Fördern und Wenden von Klärschlamm, der als in der Zeichnung nicht dargestellte Schicht auf den Trockenflächen 8, 9 ausgebreitet ist, weist die Trockenvorrichtung 6 einen Stetigförderer 10 mit zwei endlos um eine obere Trockenfläche 9 umlaufenden Zugmittel 11 auf, an denen eine Anzahl von Mitnehmern 12 für den Klärschlamm indirekt befestigt ist. Der Stetigförderer 10 bewegt den Klärschlamm in einer Förderrichtung von einem Aufnahmeende 13 zu einem Abgabeende 14 der Trockenflächen 8, 9 schrittweise und wendet dabei den Klärschlamm in Zeitabständen.

Die Zugmittel 11, beispielsweise Seile oder Ketten, sind parallel zueinander angeordnet und miteinander gekoppelt. Über eine Länge der Zugmittel 11 sind Räumbalken 15 an den Zugmitteln 11 befestigt, die gleich- oder ungleichmäßige Abstände voneinander aufweisen und sich quer von Zugmittel 11 zu Zugmittel 11 erstrecken. Die Räumbalken 15 tragen die Mitnehmer 12, die ähnlich dem Zinken eines Rechens aufgebildet sind. Die Mitnehmer 12 erstrecken sich orthogonal zu der Förderrichtung des Stetigförderers 10 und zu den Räumbalken 15. Sie stehen im Bereich der Trockenflächen 8, 9 nach oben und nach unten von dem Räumbalken 15 ab und berühren die Trockenflächen 8, 9 vorzugsweise nicht. Der Stetigförderer 10 umschließt die obere Trockenfläche 9 in Längsrichtung vollständig, die als Zwischendecke 16 in der Kammer 5 vorgesehen ist. Die darunter liegende untere Trockenfläche 8 wird von einem Boden 17 der Kammer 5 gebildet. Der Stetigförderer 10 weist ein Obertrum 18 und ein Untertrum 19 auf, die parallel zueinander und zu den Trockenflächen 8, 9 verlaufen. Der Klärschlamm wird auf den beiden Trockenflächen 8, 9 der jeweils von den nach unten gerichteten Mitnehmern 12 an dem Obertrum 18 und dem Untertrum 19 bewegt und gewendet.

Die Trockenflächen 8,9 sind in Längsrichtung, d.h. in oder entgegen der Förderrichtung zueinander versetzt angeordnet. Ein Übergabeende 20 der oberen Trockenfläche 9 ist gegenüber einem Übernahmeende 21 der unteren Trockenfläche 8 zurückgesetzt, so dass der Klärschlamm beim Erreichen des Übergabeendes 20 auf das Übernahmeende 21 fällt. Aufgrund der zwei Trockenflächen 8, 9 liegen ein Aufnahmeende 13 der oberen Trockenfläche 9 und ein Abgabeende 14 der unteren Trockenfläche 8 auf einer Stirnseite der Kammer 5. Die Kammer 5 weist auf dieser Seite einen Eintrag 22 für den zu trocknenden Klärschlamm und einen Austrag 23 für den getrockneten Klärschlamm auf. Der Eintrag 22 liegt oberhalb des Aufnahmeendes 13 und der Austrag 23 seitlich unterhalb des Abgabeendes 14 der Trockenfläche 8. Der Eintrag 22 ist mit einem Feuchtschlammbunker 24, der Austrag 23 mit einem Trockenschlammbunker 25 verbunden. Die Förderung des Klärschlamms zwischen den Bunkern 24, 25 und den Trockenflächen 8, 9 erfolgt in bekannter Art und Weise beispielsweise mittels in der Zeichnung nicht dargestellten Schneckenförderern.

Die Kammer 5 weist außerdem unten einen Lufteintritt 28 für Zuluft und oben einen Luftaustritt 29 für Abluft auf. Nach dem Luftaustritt 29 ist eine in der Zeichnung nicht dargestellte Absaugeinrichtung für die Abluft vorgesehen. Dies ermöglicht in der Kammer 5 eine entgegen der Förderrichtung des Klärschlamms gerichtete Luftströmung. Die Luftströmung beaufschlagt zuerst den Klärschlamm auf der unteren Trockenfläche 8, anschließend die obere Trockenfläche 9. Dabei entzieht sie dem Klärschlamm zunehmend Feuchtigkeit. Zur Steigerung der Verdunstung des in dem Klärschlamm enthaltenen Wassers ist die Kammer 5 vorzugsweise beheizt. Sie weist einen beheizbaren Kammerboden 17 als untere Trockenfläche 8 und eine beheizbare Zwischendecke 16 als obere Trockenfläche 9 der Trockenvorrichtung 6 auf. Eine Kammerwand 30 oder eine Kammerdecke 31 des Untergeschosses 4 kann ebenfalls beheizt sein. Die dafür vorgesehenen Heizeinrichtungen sind in der Zeichnung nicht dargestellt.

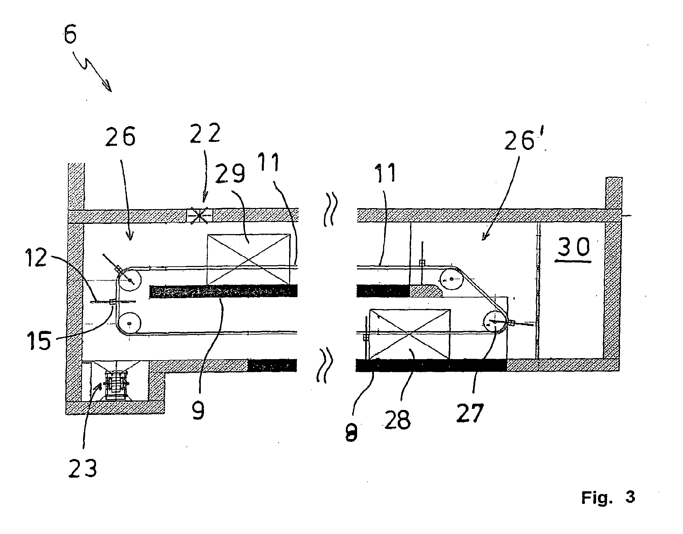

Figur 3 zeigt eine Ausschnittsvergrößerung der Trockenvorrichtung 6 aus Figur 2 im Bereich des Aufnahmeendes 13 bzw. des Abgabeendes 14 und des Übergabeendes 20 bzw. des Übernahmeendes 21 der Trockenflächen 8, 9. Der Stetigförderer 10 weist an den Enden 13, 14 der Trockenflächen 8, 9 eine erste Umlenkstation 26 und an den Enden 20, 21 der Trockenflächen 8, 9 eine zweite Umlenkstation 26' mit Umlenkrollen 27 für die Zugmittel 11 auf. Bei der dem Übergabeende 20 und dem Übernahmeende 21 zugeordneten Umlenkstation 26' sind die Umlenkrollen 27 entsprechend den der Trockenflächen 8, 9 in horizontaler Richtung zueinander versetzt angeordnet, während bei der anderen Umlenkstation 26 die Umlenkrollen 27 übereinander liegen. Die Figur 3 zeigt außerdem, wie die an den Zugmitteln 11 befestigten Räumbalken 15 an den Umlenkstationen 26, 26' vom Obertrum 18 zum Untertrum 19 und umgekehrt um 180° in Förderrichtung geschwenkt werden. Mit den Räumbalken 15 werden die daran festgelegten Mitnehmer 12 gewendet.

## Patentansprüche

1. Vorrichtung (6) zum Trocknen von Klärschlamm oder dergleichen Biomasse, mit einer Trockenfläche (8), auf die Klärschlamm ausbringbar ist, und mit einem Stetigförderer (10), der ein oder mehrere endlos umlaufende Zugmittel (11) und mindestens einen an dem Zugmittel (11) befestigten Mitnehmer (12) zum Fördern und Wenden des Klärschlamms aufweist, wobei der Mitnehmer (12) in einer Förderrichtung über die Trockenfläche (8) bewegbar ist, **dadurch gekennzeichnet, dass** die Vorrichtung (6) mindestens zwei übereinander angeordnete Trockenflächen (8, 9) aufweist und dass das mindestens eine Zugmittel (11) derart endlos entlang der Trockenflächen (8, 9) geführt ist, dass der Mitnehmer (12) über die verschiedenen Trockenflächen (8, 9) bewegt wird.

2. Vorrichtung nach Anspruch 1, **dadurch gekennzeichnet, dass** der Stetigförderer (10) mindestens zwei Mitnehmer (12) aufweist, die in entgegengesetzten Richtungen quer oder schräg zur Förderrichtung und schräg oder quer zu den Trockenflächen (8, 9) abstehen.

3. Vorrichtung nach Anspruch 1 oder 2, **dadurch gekennzeichnet, dass** ein Eintrag (22) für den Klärschlamm oberhalb einer obersten Trockenfläche (9) und ein Austrag (23) für den Klärschlamm unterhalb einer untersten Trockenfläche (8) angeordnet ist.

4. Vorrichtung nach einem der vorstehenden Ansprüche, **dadurch gekennzeichnet, dass** die Trockenflächen (8, 9) in oder entgegen der Förderrichtung zueinander versetzt sind.

5. Vorrichtung nach Anspruch 3, **dadurch gekennzeichnet, dass** der Eintrag (22) und der Austrag (23) für den Klärschlamm an einem Ende (13, 14) der Vorrichtung (6)) angeordnet sind.

6. Vorrichtung nach einem der vorstehenden Ansprüche, **dadurch gekennzeichnet, dass** der Stetigförderer (10) ein Obertrum (18), das sich entlang einer Trockenfläche (9) erstreckt, und ein Untertrum (19), das sich entlang einer tiefer befindlichen Trockenfläche (8) erstreckt, aufweist.

7. Vorrichtung nach einem der vorstehenden Ansprüche, **dadurch gekennzeichnet, dass** die Trockenfläche (8, 9) beheizbar ist.

8. Vorrichtung nach einem der vorhergehenden Ansprüche, **dadurch gekennzeichnet, dass** der Klärschlamm mit Luft, insbesondere mit Warmluft, beaufschlagbar ist.

9. Vorrichtung nach Anspruch 8, **dadurch gekennzeichnet, dass** die Vorrichtung (6) in einer Kammer (5) angeordnet ist, die unten einen Lufteintritt (28) für Zuluft und oben einen Luftaustritt (29) für Abluft aufweist, und dass die Kammer (5) eine Luftführung aufweist, so dass die Luft über mindestens eine Trockenfläche (8, 9) geführt wird.

10. Vorrichtung nach Anspruch 9, **dadurch gekennzeichnet, dass** nach dem Luftaustritt (29) eine Absaugeinrichtung für die Abluft angeordnet ist.

11. Vorrichtung nach Anspruch 9 oder 10, **dadurch gekennzeichnet, dass** die Kammer (5) beheizt ist.

12. Vorrichtung nach Anspruch 11, **dadurch gekennzeichnet, dass** ein Kammerboden (17) und/oder eine Kammerdecke (16, 31) und/oder mindestens eine Kammerwand (30) eine Heizeinrichtung aufweist.

13. Vorrichtung nach einem der vorstehenden Ansprüche, **gekennzeichnet durch** eine Solareinrichtung (7) zur Gewinnung von Sonnenenergie.

## Geänderte Patentansprüche

### Geänderte Patentansprüche gemäss Regel 137(2) EPÜ.

**1.** Vorrichtung (6) zum Trocknen von Klärschlamm oder dergleichen Biomasse, mit mindestens zwei übereinander angeordneten Trockenflächen (8, 9), auf die Klärschlamm ausbringbar ist, und mit einem Stetigförderer (10), der ein oder mehrere endlos umlaufende Zugmittel (11) und an dem Zugmittel (11) befestigte Mitnehmer (12) zum Fördern und Wenden des Klärschlamms aufweist, wobei die Mitnehmer (12) in einer Förderrichtung über die Trockenfläche (8) bewegbar sind und das mindestens eine Zugmittel (11) derart endlos entlang der Trockenflächen (8, 9) geführt ist, dass die Mitnehmer (12) über die verschiedenen Trockenflächen (8, 9) bewegt werden, **dadurch gekennzeichnet, dass** die Mitnehmer (12) über eine Breite der Trockenflächen (8, 9) verteilt an einem Räumbalken (15) angeordnet sind, von dem die Mitnehmer (12) nach oben und nach unten abstehen, wobei der Räumbalken (15) an dem mindestens einen Zugmittel (11) des Stetigförderers (10) befestigt ist.

**2.** Vorrichtung nach Anspruch 1, **dadurch gekennzeichnet, dass** ein Eintrag (22) für den Klärschlamm oberhalb einer obersten Trockenfläche (9) und ein Austrag (23) für den Klärschlamm unterhalb einer untersten Trockenfläche (8) angeordnet ist.

**3.** Vorrichtung nach einem der vorstehenden Ansprüche, **dadurch gekennzeichnet, dass** die Trockenflächen (8, 9) in oder entgegen der Förderrichtung zueinander versetzt sind.

**4.** Vorrichtung nach Anspruch 3, **dadurch gekennzeichnet, dass** der Eintrag (22) und der Austrag (23) für den Klärschlamm an einem Ende (13, 14) der Vorrichtung (6)) angeordnet sind.

**5.** Vorrichtung nach einem der vorstehenden Ansprüche, **dadurch gekennzeichnet, dass** der Stetigförderer (10) ein Obertrum (18), das sich entlang einer Trockenfläche (9) erstreckt, und ein Untertrum (19), das sich entlang einer tiefer befindlichen Trockenfläche (8) erstreckt, aufweist.

**6.** Vorrichtung nach einem der vorstehenden Ansprüche, **dadurch gekennzeichnet, dass** die Trockenfläche (8, 9) beheizbar ist.

**7.** Vorrichtung nach einem der vorhergehenden Ansprüche, **dadurch gekennzeichnet, dass** der Klärschlamm mit Luft, insbesondere mit Warmluft, beaufschlagbar ist.

**8.** Vorrichtung nach Anspruch 8, **dadurch gekennzeichnet, dass** die Vorrichtung (6) in einer Kammer (5) angeordnet ist, die unten einen Lufteintritt (28) für Zuluft und oben einen Luftaustritt (29) für Abluft aufweist, und dass die Kammer (5) eine Luftführung aufweist, so dass die Luft über mindestens eine Trockenfläche (8, 9) geführt wird.

**9.** Vorrichtung nach Anspruch 9, **dadurch gekennzeichnet, dass** nach dem Luftaustritt (29) eine Absaugeinrichtung für die Abluft angeordnet ist.

**10.** Vorrichtung nach Anspruch 9 oder 10, **dadurch gekennzeichnet, dass** die Kammer (5) beheizt ist.

**11.** Vorrichtung nach Anspruch 11, **dadurch gekennzeichnet, dass** ein Kammerboden (17) und/oder eine Kammerdecke (16, 31) und/oder mindestens eine Kammerwand (30) eine Heizeinrichtung aufweist.

**12.** Vorrichtung nach einem der vorstehenden Ansprüche, **gekennzeichnet durch** eine Solareinrichtung (7) zur Gewinnung von Sonnenenergie.
